# EUROPÄISCHE PATENTANMELDUNG

(11) **EP 3 793 139 A1**
(43) Veröffentlichungstag der Anmeldung: **17.03.2021**
(21) Anmeldenummer: 19196788.4
(22) Anmeldetag: 11.09.2019
(51) Int. Cl.: H04L 12/28

(54) **SYSTEM FÜR DIE GEBÄUDESTEUERUNG**

(71) Anmelder: Senic GmbH, 10997 Berlin (DE)
(72) Erfinder: Michaelides, Philip, 10243 Berlin (DE); Eichenwald, Tobias, 10997 Berlin (DE); Christmann, Felix, 10997 Berlin (DE); Nawrocki, Matthias, 41470 Neuss (DE); Feltgen, Christian, 41542 Dormagen Nievenheim (DE)
(74) Vertreter: Angerhausen, Christoph

(57) **Zusammenfassung**

Die Erfindung betrifft ein System für die Gebäudesteuerung, mit einer Mehrzahl optisch unterschiedlicher und jeweils drahtlos auslesbarer NFC-Tags (1), die als voneinander unabhängige Elemente beliebig miteinander kombinierbar und zueinander anordbar sind, und mit einem Endgerät (2), das eine NFC-Schnittstelle (3) aufweist und dazu eingerichtet ist, eine in einem Speicher (4) des NFC-Tags (1) hinterlegte digitale Kennung über die NFC-Schnittstelle (3) auszulesen, wobei das Endgerät (2) eine Funkschnittstelle (5) zu einem Busankoppler (6) eines Gebäudenetzwerks (7) und/oder zu einem Medienabspielgerät (8) aufweist und dazu eingerichtet ist, die digitale Kennung oder einen mit der digitalen Kennung verknüpften Steuerbefehl, der vorzugsweise ein dynamischer Steuerbefehl ist, an den Busankoppler (6) und/oder an das Medienabspielgerät (8) zu übertragen. Es wird weiterhin ein entsprechendes Verfahren beschrieben.

## Beschreibung

Die Erfindung betrifft ein System für die Gebäudesteuerung. Derartige Systeme basieren in der Regel auf einem Gebäudenetzwerk, das beispielsweise als ein Bussystem nach dem KNX-Standard ausgebildet sein kann und in welches eine Vielzahl von Geräten, insbesondere Sensoren und Aktoren, zentral ansteuerbar eingebunden sein können, beispielsweise Tastsensoren, Heizungsaktoren, Audioquellen, Beleuchtungselemente, Beschattungselemente und dergleichen. Für die Interaktion eines Bewohners eines Gebäudes mit dem Gebäudesteuerungssystem ist es üblich, dass dieser beispielsweise über ein berührungssensitives Display Eingaben zur Ansteuerung einzelner oder gruppierter Geräte tätigt. Diese Eingaben können neben der Vorgabe von Stellwerten auch andere Parameter betreffen, beispielsweise können Aktoren gruppiert werden oder Szenen entworfen werden, die das in vorgegebener Weise gleichzeitige Betätigen mehrerer der genannten Geräte ermöglichen. Das System kann ganz allgemein zur Steuerung von digitalen Inhalten, wie beispielsweise Musik, einer Gebäudeautomation, Licht und/oder Temperatur oder dergleichen eingerichtet sein.

Diese Art der Bedienung wird zum Teil als umständlich empfunden und es ist daher die Aufgabe der Erfindung, ein System für die Gebäudesteuerung vorzuschlagen, das eine einfachere Bedienung zumindest für einen Teilumfang seiner Funktionen erlaubt. Diese Aufgabe wird durch ein System mit den Merkmalen des Anspruchs 1 gelöst. Der nebengeordnete Anspruch 11 betrifft ein entsprechendes Verfahren. Vorteilhafte Ausführungsformen der Erfindung sind jeweils Gegenstand der abhängigen Ansprüche.

Demgemäß ist bei einem System für die Gebäudesteuerung vorgesehen, dass dieses eine Mehrzahl optisch unterschiedlicher oder zumindest teilweise identischer und jeweils drahtlos auslesbarer NFC-Tags aufweist, die als voneinander unabhängige Elemente beliebig miteinander kombinierbar und zueinander anordbar sind. Des Weiteren weist das System ein Endgerät auf, beispielsweise ein mobiles Endgerät, etwa ein Mobiltelefon, ein mobiles Auslesegeräte mit oder ohne Display, oder einen Tabletcomputer. Das Endgerät kann eine NFC-Schnittstelle aufweisen und dazu eingerichtet sein, eine in einem Speicher des NFC-Tags hinterlegte digitale Kennung über die NFC-Schnittstelle auszulesen. Das Endgerät weist weiterhin eine Funkschnittstelle zu einem Busankoppler eines Gebäudenetzwerks und/oder zu einem Medienabspielgerät auf und ist dazu eingerichtet, die digitale Kennung oder einen mit der digitalen Kennung verknüpften oder daraus abgeleiteten Steuerbefehl, der vorzugsweise ein dynamischer Steuerbefehl ist, an den Busankoppler und/oder an das Medienabspielgerät zu übertragen. Das Endgerät ist vorzugsweise ein mobiles Endgerät. Wenn das Endgerät und das Medienabspielgerät dasselbe Gerät sind, ist die Funkschnittstelle zwischen den beiden Geräten entbehrlich.

Demgemäß kann vorgesehen sein, mit Hilfe von NFC-Tags digitale Inhalte zu triggern. Die digitalen Inhalte können beispielsweise eine Playlist zum Abspielen auf dem Medienabspielgerät, eine Lichtszene in einem Raum eines Gebäudes, eine Kinoszene im gesamten Gebäude oder dergleichen sein. Das mobile Endgerät kann beispielsweise ein handelsübliches Smartphone sein, welches auf einen von einem Benutzer ausgewählten NFC-Tag aufgesetzt oder kurz beabstandet gehalten wird wird, um das Abrufen über die gespeicherte Kennung verknüpfter digitaler Inhalte zu triggern. Dabei ist vorgesehen, dass auf dem NFC-Tag beziehungsweise einem Speicher des NFC-Tags lediglich eine Kennung hinterlegt ist, die mit entsprechenden Daten verknüpft ist Diese verknüpften Daten können beispielsweise von dem System für die Gebäudesteuerung von einem Server des Systems oder von einem externen Server, der über eine Datenschnittstelle angeschlossen ist, abgerufen werden.

Die NFC-Tags sind grundsätzlich auf keine bestimmten Ausführungsformen beschränkt und müssen nicht zwingend nach dem internationalen NFC-Standard realisiert sein. Beispielsweise können die NFC-Tags eine beliebige andere passive Transpondertechnologie aufweisen. Sie können etwa als RFID-Transponder ausgebildet sein. Auch ein QR-Code kann ein NFC-Tag im Sinne der Erfindung sein, da er in seinem Nahfeld optisch auslesbar ist.

Wenn das System für die Gebäudesteuerung ein Medienabspielgerät aufweist, kann dieses ein Medienabspielgerät des Gebäudenetzwerks sein, beispielsweise ein in ein KNX-System eingebundenes Medienabspielgerät, beispielsweise ein Lautsprecher, ein Radio, ein Display mit oder ohne Tonausgabe oder dergleichen. Alternativ oder zusätzlich kann das Medienabspielgerät ein unabhängig von dem Gebäudenetzwerk betriebsfähiges Medienabspielgerät sein. In beiden Fällen kann das Medienabspielgerät eine Datenverbindung zu einer Medienquelle aufweisen und dazu eingerichtet sein, über die Kennung oder den mit der Kennung verknüpften Steuerbefehl identifizierte Mediendaten von der Medienquelle zu beziehen und abzuspielen.

Der mit der Kennung verknüpfte Steuerbefehl kann eine Mehrzahl voneinander unterscheidbarer Einzelbefehle zur Ansteuerung einer Mehrzahl voneinander unterscheidbarer Aktoren des Gebäudenetzwerks aufweisen. Dadurch wird erreicht, dass die Aktoren des Gebäudenetzwerks entsprechend der über den Busankoppler empfangenen Kennung oder dem Steuerbefehl individuell angesteuert werden können. Der aus einer Mehrzahl Einzelbefehle bestehende Steuerbefehl kann beispielsweise dazu eingerichtet sein, eine Szenensteuerung einer Mehrzahl Aktoren des Gebäudenetzwerkes zu ermöglichen.

Der Steuerbefehl kann mittelbar oder unmittelbar mit der Kennung verknüpft sein. Insbesondere kann der mit einer bestimmten Kennung verknüpfte Steuerbefehl ein nicht statischer, das heißt ein dynamischer Steuerbefehl sein. Beispielsweise kann die Kennung eine statische URL aufweisen, die nicht wie im Stand der Technik üblich direkt ausgewertet und aufgerufen sondern zunächst, beispielsweise in einer Datenbank, in eine dynamische URL gewandelt wird. Damit ergibt sich die Möglichkeit, frei wählbare Inhalte bzw. Steuerbefehle aufzurufen bzw. über die Kennung zu verknüpfen. Dies ermöglicht es, unterschiedliche Muster/Zwischeninhalte einzubauen ohne dass dazu der Tag selbst programmiert werden müsste. Die Muster/Zwischeninhalte können z.B. Werbung oder das Tracken von Musiktiteln aufweisen.

Die Inhalte bzw. Steuerbefehle können in einer Datenbank hinterlegt sein, die Cloudbasiert ist, wodurch es ermöglicht wird, die Inhalte bzw. Steuerbefehle bedarfsweise anzupassen, zu vervielfältigen und/oder zu teilen. Ebenfalls können dadurch auch sehr große Mengen Tags gleichzeitig bearbeitet und verteilt werden.

Beispielsweise kann in einem SmartHome erreicht werden, dass nach Belieben abhängig von der Tageszeit, dem Ort, der Temperatur, den sozialen Gegebenheit und dergleichen unterschiedliche Szenen, Musik, die Temperatur usw. gesteuert werden können, indem die in der Datenbank hinterlegten Inhalte bzw. Steuerbefehle dynamisch und abhängig von den zuvor genannten Faktoren angepasst werden

Wie bereits angedeutet wurde, kann das Medienabspielgerät ein autarkes Medienabspielgerät oder ein in das Gebäudenetzwerk eingebundenes Medienabspielgerät sein. Das Gebäudenetzwerk kann beispielsweise ein RF- oder ein TP-KNX-Netzwerk sein. Demgemäß kann das Medienabspielgerät über eine Funkschnittstelle oder eine Busleitung in das Gebäudenetzwerk eingebunden sein.

Das Endgerät, beispielsweise ein Mobiltelefon oder ein Tabletcomputer, kann über den Busankoppler des Gebäudenetzwerks an das Gebäudenetzwerk angebunden sein. Vorzugsweise ist der Busankoppler dabei ein RF-Busankoppler, über den das Endgerät mit seiner Funkschnittstelle kommunizieren kann.

Das Endgerät kann dazu eingerichtet sein, die Kennung oder ein von dem Endgerät aus der Kennung abgeleitetes Steuersignal, das den Steuerbefehl aufweist, über den Busankoppler an das Gebäudenetzwerk zu übertragen. Die Umwandlung des Steuerbefehls aus der Kennung beziehungsweise die Ableitung des Steuerbefehls aus der Kennung kann wahlweise durch das Endgerät oder das Gebäudenetzwerk erfolgen. Beispielsweise kann das Endgerät einen internen Speicher aufweisen, in dem eine Datenbank hinterlegt ist, in welcher eine Zuordnung möglicher Kennungen mit entsprechenden Steuerbefehlen enthalten ist. Analog kann diese Datenbank auf einem externen Server vorgehalten werden, der über eine Funkschnittstelle an das Endgerät angeschlossen ist. Der Server kann auch Bestandteil des Gebäudenetzwerks sein oder über eine Datenschnittstelle an das Gebäudenetzwerk angebunden sein. Der externe Server kann der Server eines Streaming-Dienstes sein.

Der mindestens eine Steuerbefehl kann mindestens einen Befehl zur Ansteuerung mindestens einer Beleuchtungseinheit oder eines Beschattungselements des Gebäudenetzwerks aufweisen. Alternativ oder zusätzlich kann der Ansteuerbefehl auch mindestens einen Befehl zur Ansteuerung einer Klimatisierungseinrichtung des Gebäudes, beispielsweise einer Heizung oder einer Kühlung, aufweisen.

Zumindest ein Teil der NFC-Tags kann als Kacheln ausgebildet oder an einem kachelförmigen Träger befestigt sein. Die Kacheln oder kachelförmigen Träger können jeweils eine ein Motiv oder eine Beschriftung aufweisende Vorderseite zur Identifizierung eines digitalen Inhalts aufweisen, der über die in dem NFC-Tag gespeicherte Kennung verknüpft ist. Der digitale Inhalt kann beispielsweise einBild- und/oder Tonmedium, eine Lichtszene, eine Kinoszene, eine Beschattungsszene oder dergleichen aufweisen. Der NFC-Tag kann weiterhin einen NFC-Chip zur Speicherung der den jeweiligen digitalen Inhalt kennzeichnenden Kennung aufweisen.

Die Kacheln können jeweils einen Haftvermittler, vorzugsweise einen Permanentmagneten, für die wiederablösbare Befestigung der Kacheln an einer Unterlage aufweisen. Weiterhin kann das System eine beispielsweise magnetische Sortieranordnung aufweisen, beispielsweise eine Sortierleiste, an der die Kachelnnach Belieben unter Einhaltung eines festen ein- oder zweidimensionalen Rastermaßes befestigbar sind und von welcher die Kacheln nach Belieben abgenommen werden können.

Gemäß einem anderen Aspekt wird ein Verfahren für die Steuerung eines Gebäudesteuerungssystems beschrieben, das die Schritte aufweist:
a. Bereitstellen einer Mehrzahl optisch voneinander unterscheidbarer NFC-Tags;
b. Auslesen einer in einem Speicher eines der NFC-Tags hinterlegten digitalen Kennung über eine NFC-Schnittstelle eines Endgeräts;
c. Übertragen der ausgelesenen Kennung oder eines mit der Kennung verknüpften Steuerbefehls von dem Endgerät an einen Busankoppler eines Gebäudenetzwerks und/oder an ein Medienabspielgerät.

Der Steuerbefehl kann darauf ausgerichtet sein, ein von dem Steuerbefehl angesprochenes Gerät des Gebäudenetzwerks oder das Medienabspielgerät dazu anzuleiten, einen digitalen Inhalt, beispielsweise Mediendaten, etwa Musikdaten, von einem Server zu beziehen und gegebenenfalls abzuspielen. Dazu kann das Medienabspielgerät, nachdem es die Kennung oder den Steuerbefehl empfangen hat, über eine Datenverbindung des Medienabspielgeräts zu einer Medienquelle über die Kennung oder den Steuerbefehl identifizierte Mediendaten von der Medienquelle beziehen und abspielen.

Das Gebäudenetzwerk kann, nachdem es die Kennung empfangen hat, auf einen Server zugreifen und mindestens einen Ansteuerbefehl für die Ansteuerung mindestens eines Aktors des Gebäudenetzwerks, der mit der Kennung verknüpft ist, von dem Server abrufen.

Der von dem Server abgerufene Ansteuerbefehl kann als Steuersignal in das Gebäudenetzwerk eingespeist werden und eine Mehrzahl Einzelansteuerbefehle aufweisende Einzelsteuersignale aufweisen. Die Einzelsteuersignale können eine Anzahl entsprechender Aktoren des Gebäudenetzwerks, vorzugsweise Beleuchtungseinheiten und/oder Beschattungselemente des Gebäudenetzwerks gleichzeitig oder nacheinander ansteuern.

Das Bereitstellen der NFC-Tags kann das Bereitstellen einer Mehrzahl über ihre Vorderseite optisch unterscheidbarer Kacheln aufweisen, von denen jede Kachel mindestens einen und vorzugsweise genau einen NFC-Tag mit einer individuellen gespeicherten Kennung aufweist, wobei das Verfahren weiterhin das Befestigen der Kacheln mit von der Gebäudewand abgewandter Vorderseite an einer Gebäudewand aufweist.

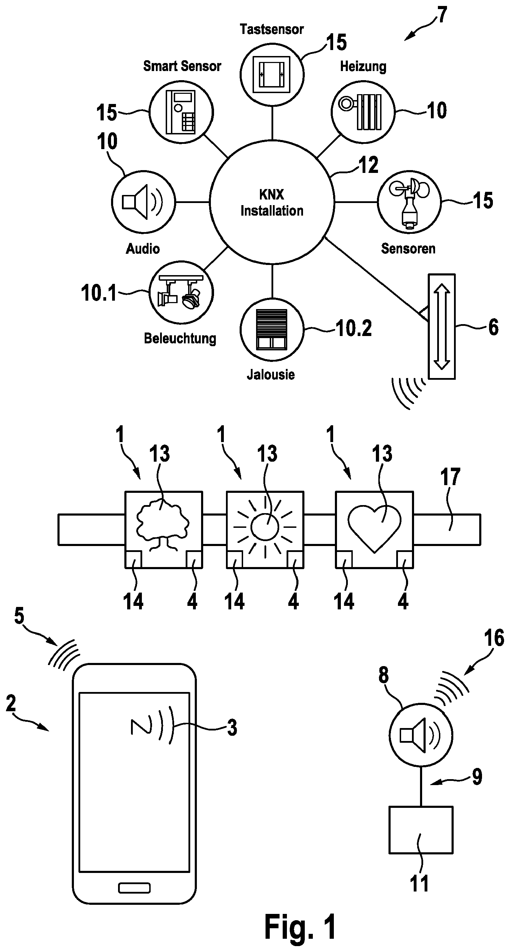

Weitere Einzelheiten der Erfindung werden anhand der nachstehenden Figur 1 erläutert. Diese zeigt in schematischer Darstellung eine beispielhafte Ausführungsform eines erfindungsgemäßen Systems für die Gebäudesteuerung.

Das System weist eine Mehrzahl optisch unterschiedlicher und drahtlos auslesbarer NFC-Tags 1 auf, die entlang einer Befestigungsleiste 17 montiert sind. Beispielsweise können die Tags 1 an ihrer Hinterseite eine magnetische Beschichtung aufweisen, mit Hilfe welcher sie an der metallischen Leiste 17 lösbar festgelegt sind. Die Befestigungsmittel, insbesondere die magnetischen Befestigungsmittel, mit Hilfe welcher die Tags 1 an der Leiste 17 festgelegt sind, können derart strukturiert sein, dass die Tags 1 unter Einhaltung eines festen Rastermaßes an der Leiste 17 festgelegt sind. Beispielsweise kann die Leiste 17 dazu einzelne Permanentmagnete aufweisen, die unter einem vorgegebenen Rasterabstand zueinander angeordnet sind.

Die Tags 1 weisen an ihrer Vorderseite ein Motiv 13 auf, anhand welches die Tags 1 voneinander unterscheidbar sind. Beispielsweise können die Motive 13 den Covern von Musikalben entsprechen, wenn die in dem Tag 1 hinterlegte Kennung eine Verknüpfung zu entsprechenden Musikdaten aufweist. Alternativ ist denkbar, dass die Motive 13 auf eine bestimmte Licht- und/oder Beschattungsszene des Gebäudes, in welchem das System für die Gebäudesteuerung realisiert ist, hinweisen, so dass die in dem Tag 1 hinterlegte Kennung mit einem Steuerbefehl verknüpft ist, welcher nach Einspeisung über den Busankoppler 6 in das Gebäudenetzwerk 7 entsprechende Aktoren des Netzwerks 7 ansteuert, so dass die ausgewählte Szene erreicht wird.

Das mobile Endgerät 2 ist in der vorliegenden Ausführungsform als ein Smartphone ausgebildet, soll jedoch nach den Prinzipien der Erfindung nicht auf derartige Vorrichtungen beschränkt sein. Beispielsweise sind auch Tabletcomputer und jegliche andere in der Hand haltbare Vorrichtungen denkbar, welche eine NFC-Schnittstelle 3 aufweisen, die das Auslesen der NFC-Tags 1 und insbesondere der in dem Speicher 4 der Tags 1 hinterlegten Kennungen erlauben. Für das Auslesen der NFC-Tags 1 wird folglich das Smartphone 2 einem für die Auslesung vorgesehenen Tag 1 der Mehrzahl Tags 1 angenähert, woraufhin aus dem Speicher 4 des NFC-Chips 14 des Tags 1 die Kennung über die NFC-Schnittstelle 3 an das Endgerät 2 übertragen wird.

Nachdem die Kennung von dem Endgerät 2 empfangen worden ist, kann das Endgerät 2 die Kennung den mit der Kennung verknüpften digitalen Inhalten zuordnen, beispielsweise Mediendaten. Zwar ist es grundsätzlich denkbar, dass entsprechende Mediendaten auf dem Endgerät 2 selbst hinterlegt sind, so dass diese in unmittelbar von dem Endgerät bereitgestellt werden können. Relevanter ist jedoch die Ausführungsform, wonach das Endgerät 2 durch Zugriff auf einen externen Server die Verknüpfung zwischen der Kennung und den digitalen Inhalten, beispielsweise den Mediendaten herstellt und daraufhin einen Steuerbefehl erzeugt, welchen das Endgerät beispielsweise über korrespondierende Funkschnittstellen 5, 16 des Endgeräts 2 und eines Medienabspielgeräts 8 an das Medienabspielgerät 8 überträgt, welches daraufhin dem Ansteuerungsbefehl folgend entsprechende Mediendaten über eine Schnittstelle 9 von einer Medienquelle 11, beispielsweise von einem IP-Server eines Streaming-Dienstes, bezieht und abspielt.

Alternativ oder zusätzlich kann die mit dem Endgerät 2 ausgelesene Kennung originär, das heißt als die ausgelesene Kennung selbst unmittelbar über die Funkschnittstelle 5 des Endgeräts 2 an den Medienkoppler 6 des Gebäudenetzwerks 7 übertragen werden. Demgemäß ist der Busankoppler 6 vorzugsweise ein RF-Busankoppler. In diesem Falle kann das Gebäudenetzwerk 7, beispielsweise ein zentraler Host-Server des Gebäudenetzwerks dazu eingerichtet sein, gegebenenfalls durch Zugriff auf einen externen IP-Server, beispielsweise einen Streaming-Dienst, der Kennung entsprechende digitale Inhalte, beispielsweise Mediendaten, beziehen und über eine Audioausgabe des Gebäudenetzwerks 7 auszugeben.

Alternativ wird jedoch insbesondere die Ausführungsform relevant sein, wonach die aus dem NFC-Tag 1 ausgelesene Kennung eine Szene für die Gebäudesteuerung betrifft, beispielsweise eine Beschattungsszene oder eine Beleuchtungsszene, eine Kombination dieser oder dergleichen, so dass nach dem Empfangen der Kennung von dem NFC-Tag 1 die Kennung auf dem Endgerät 2 in einen entsprechenden Ansteuerbefehl zur Ansteuerung entsprechender Aktoren des Gebäudenetzwerks 7 umgewandelt oder als originäre Kennung über den RF-Busankoppler 6 an den Server 12 des Gebäudenetzwerks 7 übertragen wird. Im letzteren Fall würde dann der Server 12 des Netzwerks 7 die Kennung in einen entsprechenden Steuerbefehl umwandeln und an die Aktoren 10, 10.1, 10.2 des Netzwerks 7 weiterleiten, so dass dem Steuerbefehl entsprechend angesprochene Aktoren eine dem Befehl entsprechende Aktion durchführen, beispielsweise eine Jalousie, ein Thermostatventil, eine Beleuchtung oder dergleichen verstellen.

Alternativ kann das mobile Endgerät 2 dazu eingerichtet sein, einen mit der Kennung verknüpften Steuerbefehl zu erzeugen oder von einem externen Server, beispielsweise von einem IP-Server, zu beziehen und über den Busankoppler 6 unmittelbar in das Gebäudenetzwerk 7 einzuspeisen, so dass keine weitere Datenverarbeitungsfunktion von dem Server 12 durchgeführt werden muss und dieser lediglich für die Distribution des Steuerbefehls im Netzwerk 7 erforderlich ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: NFC-Tag
- 2: Endgerät
- 3: NFC-Schnittstelle
- 4: Speicher
- 5: Funkschnittstelle
- 6: Busankoppler
- 7: Gebäudenetzwerk
- 8: Medienabspielgerät
- 9: Datenverbindung
- 10: Aktor
- 10.1: Beleuchtungseinheit
- 10.2: Beschattungselement
- 11: Medienquelle
- 12: Server
- 13: Motiv
- 14: NFC-Chip
- 15: Sensor
- 16: weitere Funkschnittstelle
- 17: Befestigungsleiste

## Patentansprüche

1. System für die Gebäudesteuerung, mit einer Mehrzahl optisch unterschiedlicher und jeweils drahtlos auslesbarer NFC-Tags (1), die als voneinander unabhängige Elemente beliebig miteinander kombinierbar und zueinander anordbar sind, und mit einem Endgerät (2), das eine NFC-Schnittstelle (3) aufweist und dazu eingerichtet ist, eine in einem Speicher (4) des NFC-Tags (1) hinterlegte digitale Kennung über die NFC-Schnittstelle (3) auszulesen, wobei das Endgerät (2) eine Funkschnittstelle (5) zu einem Busankoppler (6) eines Gebäudenetzwerks (7) und/oder zu einem Medienabspielgerät (8) aufweist und dazu eingerichtet ist, die digitale Kennung oder einen mit der digitalen Kennung verknüpften Steuerbefehl, der vorzugsweise ein dynamischer Steuerbefehl ist, an den Busankoppler (6) und/oder an das Medienabspielgerät (8) zu übertragen.

2. System nach Anspruch 1, bei dem das Medienabspielgerät (8) eine Datenverbindung (9) zu einer Medienquelle (11) aufweist und dazu eingerichtet ist, über die Kennung oder den mit der Kennung verknüpften Steuerbefehl identifizierte Mediendaten von der Medienquelle (11) zu beziehen und abzuspielen.

3. System nach Anspruch 1 oder 2, bei dem der Steuerbefehl eine Mehrzahl voneinander unterscheidbare Einzelbefehle zur Ansteuerung einer Mehrzahl voneinander unterscheidbarer Aktoren (10) des Gebäudenetzwerks (7) aufweist, sodass die Aktoren (10) des Gebäudenetzwerks (7) entsprechend der über den Busankoppler (6) empfangenen Kennung oder dem Steuerbefehl individuell angesteuert sind.

4. System nach einem der vorangegangenen Ansprüche, bei dem das Medienabspielgerät (8) ein autarkes Medienabspielgerät (8) oder ein in das Gebäudenetzwerk (7), vorzugsweise in ein RF- oder ein TP-KNX-Netzwerk, eingebundenes Medienabspielgerät (8) ist.

5. System nach einem der vorangegangenen Ansprüche, bei dem das Endgerät (2) ein mobiles Endgerät, vorzugsweise ein Mobiltelefon oder ein Tabletcomputer ist, das über den Busankoppler (6), der vorzugsweise ein RF-Busankoppler (6) ist, an das Gebäudenetzwerk (7) angebunden ist.

6. System nach einem der vorangegangenen Ansprüche, bei dem das Endgerät (2) dazu eingerichtet ist, die Kennung oder ein von dem Endgerät (2) aus der Kennung abgeleitetes Steuersignal, das den Steuerbefehl aufweist, über den Busankoppler (6) an das Gebäudenetzwerk (7) zu übertragen.

7. System nach einem der vorangegangenen Ansprüche, bei dem das Gebäudenetzwerk (7) einen Server (12) aufweist oder über eine Datenschnittstelle Zugriff auf einen externen Server (12) hat, auf dem mindestens ein Ansteuerbefehl für die Ansteuerung mindestens eines Aktors (10) des Gebäudenetzwerks (7) hinterlegt ist, wobei der Ansteuerbefehl mit der Kennung verknüpft ist.

8. System nach Anspruch 7, bei der der mindestens eine Ansteuerbefehl mindestens einen Befehl zur Ansteuerung mindestens einer Beleuchtungseinheit (10.1) oder eines Beschattungselements (10.2) des Gebäudenetzwerks (7) aufweist.

9. System nach einem der vorangegangenen Ansprüche, bei der zumindest ein Teil der NFC-Tags (1) als Kacheln ausgebildet oder an einem kachelförmigen Träger befestigt sind, wobei die Kacheln oder kachelförmigen Trägerjeweils eine ein Motiv (13) oder Beschriftung aufweisende Vorderseite zur Identifizierung eines digitalen Inhalts, vorzugsweise eines Mediums, einer Lichtszene, einer Kinoszene, oder einer Beschattungszene, und einen NFC-Chip (14) zur Speicherung der den jeweiligen digitalen Inhalt kennzeichnenden Kennung aufweisen.

10. System nach Anspruch 9, bei der die Kacheln jeweils einen Haftvermittler, vorzugsweise einen Permanentmagneten, für die wieder ablösbare Befestigung der Kacheln an einer Unterlage aufweisen, und wobei das System vorzugsweise weiterhin eine magnetische Sortieranordnung, beispielsweise eine Sortierleiste, aufweist, an der die Kacheln wahlweise unter Einhaltung eines festen ein- oder zweidimensionalen Rastermaßes befestigt sind und von welcher die Kacheln wahlweise abgenommen werden können.

11. Verfahren für die Steuerung eines Gebäudesteuerungssystems, das die Schritte aufweist:
a. Bereitstellen einer Mehrzahl optisch voneinander unterscheidbarer NFC-Tags (1);
b. Auslesen einer in einem Speicher (4) eines der NFC-Tags (1) hinterlegten digitalen Kennung über eine NFC-Schnittstelle (3) eines Endgeräts (2);
c. Übertragen der ausgelesenen Kennung oder eines mit der Kennung verknüpften Steuerbefehls von dem Endgerät (2) an einen Busankoppler (6) eines Gebäudenetzwerks (7) und/oder an ein Medienabspielgerät (8).

12. Verfahren nach Anspruch 11, bei dem das Medienabspielgerät (8) nachdem es die Kennung oder den Steuerbefehl empfangen hat, über eine Datenverbindung (9) des Medienabspielgeräts (8) zu einer Medienquelle (11) über die Kennung oder den Steuerbefehl identifizierte Mediendaten von der Medienquelle (11) bezieht und abspielt.

13. Verfahren nach Anspruch 11 oder 12, bei dem das Gebäudenetzwerk (7) nachdem es die Kennung empfangen hat, auf einen Server (12) zugreift und mindestens einen Ansteuerbefehl für die Ansteuerung mindestens eines Aktors (10) des Gebäudenetzwerks (7), der mit der Kennung verknüpft ist, von dem Server (12) abruft.

14. Verfahren nach Anspruch 13, bei dem der von dem Server (12) abgerufene Ansteuerbefehl als Steuersignal in das Gebäudenetzwerk (7) eingespeist wird, und eine Mehrzahl Einzelansteuerbefehle aufweisende Einzelsteuersignale aufweist, die eine entsprechende Mehrzahl Aktoren (10) des Gebäudenetzwerks (7), vorzugsweise Beleuchtungseinheiten (10.1) und/oder Beschattungselemente (10.2) des Gebäudenetzwerks (7), gleichzeitig oder nacheinander ansteuern.

15. Verfahren nach einem der Ansprüche 11 bis 14, bei dem das Bereitstellen der NFC-Tags (1) das Bereitstellen einer Mehrzahl über ihre Vorderseite optisch unterscheidbarer Kacheln aufweist, von denen jede Kachel mindestens einen und vorzugsweise genau einen NFC-Tag (1) mit einer individuellen gespeicherten Kennung aufweist, wobei das Verfahren weiterhin das Befestigen der Kacheln mit von der Gebäudewand abgewandter Vorderseite an einer Gebäudewand aufweist.
